# EUROPÄISCHE PATENTSCHRIFT

(11) **EP 0 864 510 B1**
(45) Veröffentlichungstag und Bekanntmachung des Hinweises auf die Patenterteilung: **21.02.2001**
(21) Anmeldenummer: 97104316.1
(22) Anmeldetag: 13.03.1997
(51) Int. Cl.: B65D 88/66, A47J 42/50

(54) **Behälter**
Container
Récipient

(43) Veröffentlichungstag der Anmeldung: 16.09.1998
(73) Patentinhaber: WMF WÜRTTEMBERGISCHE METALLWARENFABRIK AG, 73309 Geislingen/Steige (DE)
(72) Erfinder: Wittlinger, Gerhard, 73312 Geislingen/Steige (DE); Riesenegger, Helmut, 89312 Günzburg (DE); Arndt, Peter, 89134 Blaustein (DE); Kiefer, Alexander, 73329 Kuchen (DE); Albert, Heinz, 89150 Laichingen (DE); Gussmann, Jochen, 73312 Geislingen/St. (DE); Schneider, Jürgen, 73312 Geislingen/St. (DE)
(74) Vertreter: Grünecker, Kinkeldey, Stockmair & Schwanhäusser Anwaltssozietät

(56) Entgegenhaltungen:
- EP-A- 0 207 303
- EP-A- 0 605 750
- DE-A- 2 752 406
- DE-A- 3 428 505
- DE-U- 29 511 912
- FR-A- 2 508 424
- US-A- 4 472 091
- US-A- 4 936 515
- US-A- 5 381 967

## Beschreibung

Die Erfindung bezieht sich auf einen Behälter mit Schwerkraftfluß für Kaffeebohnen, der im Oberbegriff von Anspruch 1 erläuterten Art.

Ein Behälter dieser Art ist aus der DE-A-27 52 406 bekannt. In dieser Druckschrift sind eine Vielzahl von Behältern mit den verschiedenartigsten Rüttlern beschrieben, deren gemeinsames Merkmal ihre plattenartige Ausbildung ist. Plattenartig ausgebildete Rüttler haben jedoch den entscheidenen Nachteil, daß sie die Fließströmung der Kaffeebohnen in im wesentlichen zwei getrennte Ströme teilen und einen relativ großen Querschnittsanteil des Fließquerschnittes einnehmen. Dies ist insbesondere dort nachteilig, wo es auf eine exakte Dosierung der Kaffeebohnen und/oder auf eine möglichst kurze Auslaufzeit ankommt, wie es beispielsweise bei automatischen Kaffeemaschinen der Fall ist. Darüber hinaus sind die plattenförmigen Rüttler in den Freiheitsgraden ihrer Bewegung beschränkt. So muß beispielsweise der bekannte plattenförmige Rüttler so bewegt werden, daß er sich nur mit seiner Schmalseite durch die Kaffeebohnen bewegt, was eine ortsfeste Lagerung des Rüttlers bedingt und zusätzlich die Möglichkeit ausschließt, daß dem Rüttler noch andere Freiheitsgrade der Bewegung gegeben werden können.

Zwar ist ein fingerförmiger Rüttler beispielsweise aus der US-A-4 472 091 bekannt, jedoch lediglich zum Einbringen von Vibrationen beim Fördern von trockenem Pulver, wie es beispielsweise für Sandstrahlgebläse verwendet wird. Der fingerförmige Rüttler ist auf einem flachen, metallischen Träger befestigt, der durch ein piezoelektrisches Element in Schwingungen versetzt wird. Das Fließverhalten unter Schwerkrafteinfluß von trockenem Pulver unterscheidet sich jedoch entscheidend vom Fließverhalten von Kaffeebohnen, wobei bei Kaffeebohnen festgestellt wurde, daß das Erzeugen von Schwingungen allein nicht ausreicht, um eine Brückenbildung zuverlässig zu verhindern.

Vorratsbehälter für Kaffeebohnen werden beispielsweise bei automatisch oder halbautomatisch arbeitenden Kaffeemaschinen, reinen Kaffeemühlen oder für andere Zwecke eingesetzt. Derartige Vorratsbehälter weisen meist einen Auslauftrichter in Form eines trichterförmigen Bodens auf, der in eine Entnahmeöffnung mündet, so daß die Kaffeebohnen unter Schwerkrafteinfluß unter ihrem eigenen Gewicht nach unten durch die Entnahmeöffnung rutschen. Bei Kaffeebohnen stellt sich jedoch, wie bei den meisten Schüttgütern, wenn sie unter Schwerkrafteinfluß gefördert werden, das Problem der sogenannten Brückenbildung. Unter bestimmten Umständen kann es dabei passieren, daß sich die Kaffeebohnen derart gegeneinander abstützen, daß sich über der Entnahmeöffnung eine Brücke ausbildet, die ein Nachrutschen von Schüttgut durch die Entnahmeöffnung verhindert. Um diese Brückenbildungen gar nicht erst auftreten zu lassen bzw. eventuell aufgetretene Brücken sofort zu zerstören, sind im Stand der Technik eine Vielzahl von Einrichtungen bekannt. Bekannt ist es beispielsweise, einen exzenterbetriebenen Rüttler einzusetzen, der auf die Wandung des Schüttgut-Vorratsbehälters wirkt. Bekannt ist weiterhin kreisende Ketten oder rotierende Formkörper im Inneren des Schüttgutbehälters zu verwenden oder ein Innenrohr mit oder ohne Lufteintrag oder dgl. einzusetzen. Alle diese Maßnahmen sind jedoch für Kaffeebohnen nicht unbedingt geeignet, da einerseits die Kaffeebohnen nicht bereits im Vorratsbehälter zerkleinert werden sollen und andererseits ein an der Wandung des Vorratsbehälters angreifender Rüttler zu viel Lärm verursachen würde, was beispielsweise bei offener Aufstellung des Vorratsbehälters auf einer Kaffeehaustheke oder dgl. unakzeptabel ist. Es wurde weiterhin bereits versucht, die Neigung des Einlauftrichters konstruktiv so flach auszubilden, daß dadurch keine Brückenbildung stattfindet. Dies ist jedoch meist aus Platzgründen nicht möglich. Außerdem bleiben bei zu flachen Auslauftrichtern Kaffeebohnen in den Ecken hängen, was deren Verweilzeit im Vorratsbehälter erhöht und somit ihre Qualität beeinträchtigt.

Für Kaffeebohnen-Vorratsbehälter wurde weiterhin bereits eine Art Schwingstab als Rüttler eingesetzt, der über einen Exzenter angetrieben wurde. Der Schwingstab wurde mit seiner Mitte an einem Ausleger befestigt, der den Schwingstab in der Mitte des Auslauftrichters hielt. Ein Ende des Auslegers wurde durch einen vom Exzenter auf- und abbewegten Nocken in Schwingungen versetzt, und übertrug die Schwingungen auf den Schwingstab. Der Exzenter war auf der Antriebswelle einer Förderschnecke befestigt, die sich quer unterhalb der Entnahmeöffnung erstreckte und die durch die Entnahmeöffnung fallenden Kaffeebohnen zum Mahlwerk transportierte. Es mußte jedoch festgestellt werden, daß sich auch mit diesem Rüttler eine Brückenbildung nicht zuverlässig vermeiden ließ.

Der Erfindung liegt somit die Aufgabe zugrunde, einen Rüttler für einen Behälter für Kaffeebohnen zu schaffen, der auf konstruktiv einfache Weise eine Brückenbildung verhindern kann.

Die Aufgabe wird durch die im Anspruch 1 angegebenen Merkmale gelöst.

Durch die Ausgestaltung des erfindungsgemäßen Rüttlers mit einem in einer Führung geführten Fingerelement mit einem freien Ende, das in den Auslauftrichter ragt und dort eine Pendelbewegung, d.h. eine hin- und hergehende Bewegung quer zur Fließrichtung der Kaffeebohnen ausführt, werden die Kaffeebohnen schonend behandelt. Trotzdem hat es sich überraschenderweise herausgestellt, daß damit eine Brückenbildung weitgehend verhindert werden kann.

Noch weiter verbessert wird die Wirkung des erfindungsgemäßen Rüttlers, wenn der Pendelbewegung gemäß Anspruch 2 eine Exzenterbewegung, d.h. eine auf- und abwärtsgehende Bewegung in Fließrichtung unter Schwerkrafteinfluß, überlagert wird.

Eine weitere Optimierung der Bewegung kann durch die Schwenkbewegung gemäß Anspruch 3 erzielt werden, die die Pendelbewegung oder die kombinierten Pendel- und Exzenterbewegungen überlagert. Durch Überlagerung dieser drei Bewegungsarten wird eine sehr wirksame und für die Kaffeebohnen trotzdem schonende Taumelbewegung des freien Endes des Rüttlers erzielt.

Wird die Führung gemäß Anspruch 4 als Ringnut in einer Antriebswelle ausgebildet, so kann mit konstruktiv minimalstem Aufwand eine komplexe, sich aus einer Pendelbewegung und einer Schwenkbewegung zusammensetzende Bewegung des freien Endes erzielt werden.

Wird schließlich gemäß Anspruch 5 die Ringnut exzentrisch zur Drehachse der Welle ausgeführt, so ergeben sich, wiederum auf konstruktiv einfachste Weise, die komplizierten Bewegungsüberlagerungen aus einer Pendel-, einer Exzenter- und einer Schwenkbewegung.

Die Anordnung des Antriebs und des Fingerelementes gemäß Anspruch 6 ist besonders einfach, und verstellt nicht die Einfüllöffnung in den Vorratsbehälter.

Die Lagerung des Fingerelementes gemäß Anspruch 7 stellt einerseits sicher, daß das Fingerelement immer mit seinem Antrieb verbunden bleibt und ist andererseits konstruktiv besonders einfach zu lösen.

Die Maßnahme gemäß Anspruch 8 erleichtert die Montage.

Die Maßnahme nach Anspruch 9 verbessert die Wirkung des Fingerelementes zur Verhinderung einer Brückenbildung noch zusätzlich.

Anspruch 10 beschreibt eine besonders bevorzugte Form des freien Endes des Fingerelementes, die einerseits für eine optimale Bewegung der Kaffeebohnen sorgt, was eine Brückenbildung wirksam verhindert, die jedoch andererseits bei ihrer Bewegung den Schwerkraftfluß der Kaffeebohnen auf geradem Weg aus dem Vorratsbehälter durch die Entnahmeöffnung so wenig wie möglich stört, also beispielsweise bei ihrer Bewegung die Kaffeebohnen so wenig wie möglich mitnimmt.

Diese Fähigkeit, sich möglichst ohne Störung des Schwerkraftflusses durch die Kaffeebohnen zu bewegen, wird durch die Maßnahme nach Anspruch 11 noch weiter verbessert. Außerdem wird dadurch der Verschleiß des Fingerelementes stark herabgesetzt.

Anspruch 12 beschreibt eine besonders bevorzugte Verwendung des erfindungsgemäßen Behälters, integriert in eine Kaffeemaschine, die zur Verwendung des erfindungsgemäßen Behälters entsprechend konstruktiv angepaßt ist.

Ausführungsbeispiele der Erfindung werden nachfolgend anhand der Zeichnungen näher erläutert. Es zeigen:
- Fig. 1: eine schematische Darstellung einer Kaffeemaschine, die mit dem erfindungsgemäßen Behälter ausgerüstet ist,
- Fig. 2: eine herausvergrößerte Einzelheit aus Fig. 1,
- Fig. 3: eine Vorderansicht eines bevorzugten Fingerelementes,
- Fig. 4: die Seitenansicht von Fig. 3,
- Fig. 5: die Vorderansicht eines weiteren Fingerelementes,
- Fig. 6: die Seitenansicht der Fig. 5,
- Fig. 7: die Ringnut in einer Ansicht ähnlich Fig. 2,
- Fig. 8: die Draufsicht auf Fig. 7,
- Fig. 9: den Schnitt IX-IX aus Fig. 7,
- Fig. 10 + 11: die Darstellung der Pendelbewegung,
- Fig.12 + 13: die Darstellung der Exzenterbewegung, und
- Fig.14 + 15: die Darstellung der Schwenkbewegung.

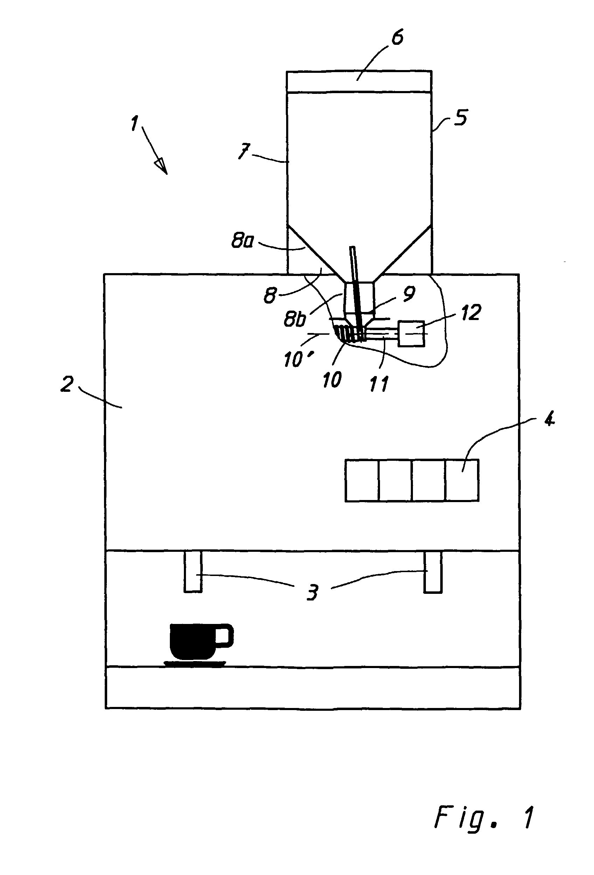

Aus Fig. 1 ist eine schematisch dargestellte Kaffeemaschine 1 ersichtlich, die ein übliches Gehäuse 2, Ausläufe 3 für verschiedene Getränke bzw. heißes Wasser, Bedienelemente 4 und einen Vorratsbehälter 5 für Kaffeebohnen aufweist, dessen obere Öffnung mit einem Deckel 6 verschlossen werden kann, so daß bei Bedarf Kaffeebohnen in den Vorratsbehälter 5 eingefüllt werden können.

Dieser Vorratsbehälter 5 ist mit im wesentlichen senkrechter Mittellinie 5' oben auf der Oberseite des Gehäuses 2 angeordnet und bildet somit den höchsten Punkt im Förderweg der Kaffeebohnen. Der Vorratsbehälter 5 besteht aus einer zylindrischen Wandung 7, an den sich nach unten hin ein Auslauftrichter 8 anschließt. Der Auslauftrichter 8 enthält ein konisches Teil 8a und einen zylindrischen Auslaufstutzen 8b, an dessen unterem Ende ein Entnahmeöffnung 9 vorgesehen ist. Die Neigung des konischen Teils 8a des Auslauftrichters 8 kann beliebig gewählt werden, sollte jedoch so bemessen sein, daß Kaffeebohnen über die gesamte Querschnittsfläche des zylindrischen Teiles 7 im wesentlichen gleichmäßig abgezogen werden können und keine Kaffeebohnenreste in den Ecken am Übergang zwischen dem zylindrischen und dem konischen Teil hängenbleiben. Die Entnahmeöffnung 9 liegt in einer horizontalen Ebene, senkrecht zur Mittellinie 5' des Vorratsbehälters 5.

In einem kleinen Abstand unterhalb der Entnahmeöffnung ist eine Förderschnecke 10 so angeordnet, daß sie Kaffeebohnen aus der Entnahmeöffnung 9 abziehen und wegfördern kann. Die Förderschnecke 10 wird über eine Antriebswelle 11 von einem Motor 12 angetrieben, wobei die Antriebswelle 11 im dargestellten Ausführungsbeispiel integral mit der Förderschnecke 10 und koaxial zu ihrer Längsachse 10' ausgebildet ist. Der Motor 12 treibt die Förderschnecke 10 mit einer relativ hohen Nenndrehzahl von 1300 U/min an. In Anpassung an die hohe Drehzahl ist die Förderschnecke 10 mit relativ niedrigen, flachen Gängen versehen.

Auf der Antriebswelle 11 sitzt ein Rüttler 13, der in die Kaffeebohnen im Vorratsbehälter 5 eine derartige Bewegung hineintragen soll, daß sich über der Entnahmeöffnung 9 keine Brücke aus sich gegenseitig abstützenden Kaffeebohnen ausbilden kann, die ein Nachrutschen von Kaffeebohnen verhindert. Der Rüttler 13 enthält eine weiter unten beschriebene Führung 14 in der Antriebswelle 11 und ein Fingerelement 15, das mit einem seiner Enden 15a in der Führung 14 sitzt, sich mit im wesentlichen senkrecht verlaufender Längsmittellinie 15' durch die Entnahmeöffnung 9, den zylindrischen Teil 8b des Auslauftrichters 8 bis in den konischen Teil 8a des Auslauftrichters 8 erstreckt und mit seinem freien Ende 15b bis in die Nähe oder bis in den zylindrischen Wandungsteil 7 des Vorratsbehälters 5 ragt.

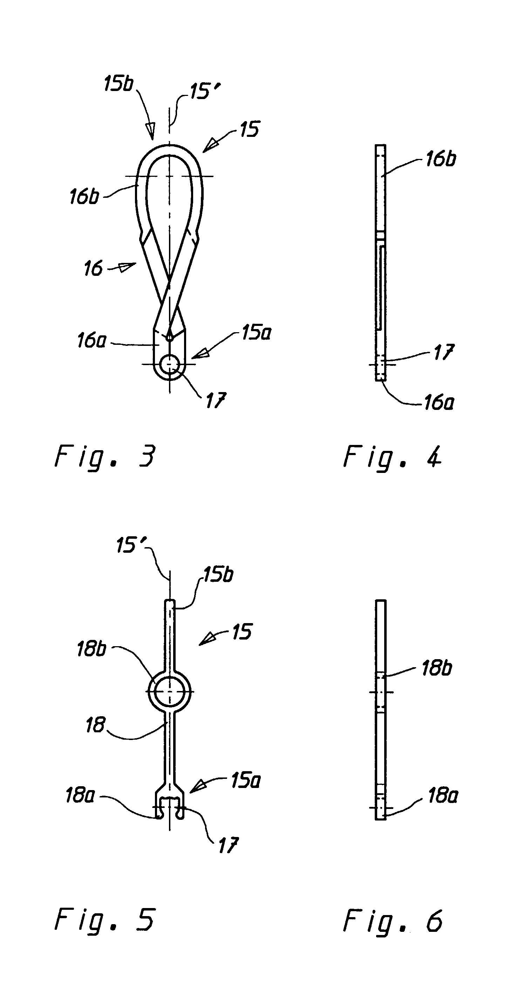

Dieses Fingerelement 15 kann die unterschiedlichsten Formen, beispielsweise die in den Fig. 3 bis 6 dargestellten Formen aufweisen. Gemäß einem bevorzugten Ausführungsbeispiel in den Fig. 3 und 4 ist das Fingerelement 15 als Klammer 16 aus einem Kunststoff-Materialstrang oder einem Metallstab geformt. Die Klammer 16 ist so ausgebildet, daß das Befestigungsende 15a in der Führung 14 als zweiteilige Zange 16a ausgebildet ist, deren beide Teile eine Aufnahmeöffnung 17 bilden, die so groß ist, daß sie die Führung 14 in der Antriebswelle 11 lose aber vollständig umschließen kann. Die Zange 16a wird durch die Materialelastizität zusammengehalten. Das freie Ende 15b wird durch eine Materialstrangschlaufe 16b mit freien Innenraum gebildet. Die Schlaufe 16b bildet flügelartig sich seitwärts beidseitig der Längsmittellinie 15' des Fingerelementes 15 verbreiternde Bereiche. Wie ein Vergleich zwischen den Fig. 3 und 4 zeigt, ergibt dies eine nicht-rotationssymmetrische Gestalt des Fingerelementes 15. Wie Fig. 3 zeigt, ist die Klammer 16 in Richtung auf die Zange 16a breiter als im Bereich der Schlaufe 16b, wodurch die Schlaufe 16b flexibler gegenüber der eher steifen Zange 16b ist.

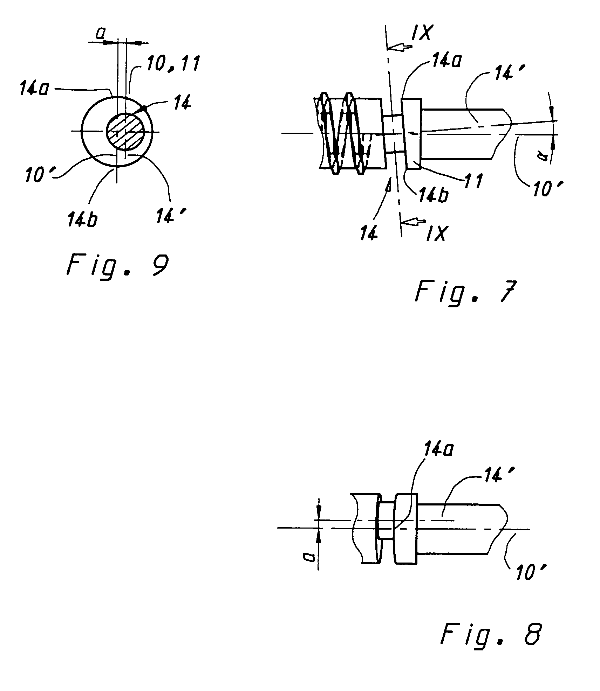

Ein weiteres Ausführungsbeispiel eines Fingerelementes 15 ist aus den Fig. 5 und 6 ersichtlich. Dieses Fingerelement 15 ist als rechteckiger Stab 18 ausgebildet und an seinem in die Führung 14 eingreifenden Ende 15a mit einer Aufklipseinrichtung 18a versehen, die wiederum eine Aufnahmeöffnung 17 umschließt, die geeignet ist, die Antriebswelle 11 im Bereich der Führung 14 lose zu umschließen. In Richtung auf das freie Ende 15b des Fingerelementes 15 ist ein Ring 18b eingeformt, der wiederum eine Öffnung umschließt und sich beidseitig der Mittellinie 15' flügelartig verbreitert, so daß sich zusammen mit dem im wesentlichen rechteckigen Querschnitt des Stabes 18 wiederum eine nicht-rotationssymmetrische Form ergibt.

Wie die Fig. 7 bis 9 zeigen, ist die Führung 14 des Rüttlers 13 als Ringnut ausgebildet und in die Antriebswelle 11 schräg, d.h. mit einer um den Winkel α gegenüber der Drehachse 10' geneigten Mittellinie 14', ausgebildet. Der Winkel α beträgt etwa 5°. Dadurch bildet die Ringnut zwei einander diametral gegenüberliegende Umkehrpunkte 14a und 14b ihrer Windungsrichtung. Gleichzeitig ist die Ringnut 14 mit ihrer Mittellinie 14' exzentrisch zur Drehachse 10' angeordnet, d.h. die Mittellinie 14' weist zur Drehachse 10' einen Abstand a auf, der etwa 2 mm beträgt. Dabei liegt die Mittellinie 14' in einer Ebene, die parallel zu einer senkrechten Ebene durch die Drehachse 10' angeordnet ist, betrachtet bei Draufsicht auf die Umkehrpunkte 14a, 14b, d.h. die exzentrische Versetzung der Mittellinie 14' der Ringnut 14 erfolgt zu derjenigen Seite der Ringnut 14, die zwischen den beiden Umkehrpunkten 14a und 14b liegt.

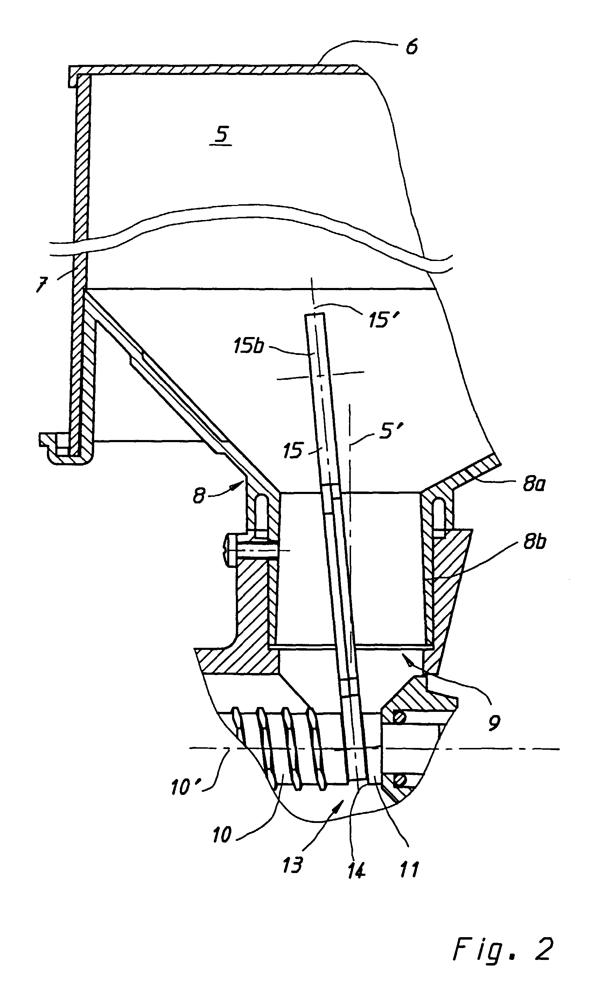

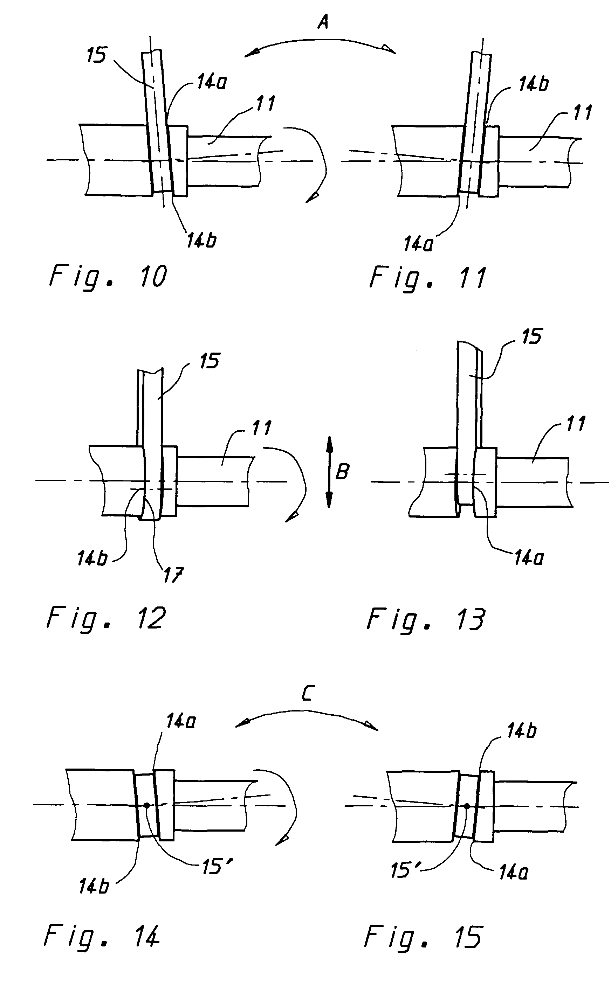

In die Ringnut 14 wird das Fingerelement 15 so aufgeklammert oder eingeklipst, je nach der verwendeten Form des Fingerelementes 14, daß seine breiteren Abmessungen quer zur Drehachse 10' verlaufen. Wenn man annimmt, daß beim Aufsetzen des Fingerelementes 15 die Antriebswelle 11 in einer Stellung steht, in der der Umkehrpunkt 14a (der Förderschnecke 10 zugewandt) oben, d.h. am höchsten Punkt der Antriebswelle 11 liegt, ist das Fingerelement 15 nach links geneigt angeordnet, wie dies in den Fig. 2 und 10 gezeigt ist. Dreht sich jetzt die Antriebswelle 11 um eine halbe Umdrehung, dreht sich der in Fig. 10 untenliegende Umkehrpunkt 14b, d.h. derjenige Umkehrpunkt der näher am Motor liegt, nach oben, während der in Fig. 10 obenliegende Umkehrpunkt 14a, der näher an der Förderschnecke 10 liegt, nach unten gelangt, so daß das Fingerelement 15 die in den Fig. 10 und 11 dargestellte Schwenkbewegung quer zur Fließrichtung der Kaffeebohnen unter Schwerkrafteinfluß ausführt, die sich bei einer vollen Umdrehung der Antriebswelle 11 zu einer hin- und hergehenden Pendelbewegung A ergänzt. Dabei stützt sich das Fingerelement 15 an irgendeinem Teil des Vorratsbehälters 5, beispielsweise dem zylindrischen Teil 8b des Auslauftrichters 8 ab, so daß das Fingerelement 15 bei der Drehung der Antriebswelle 11 nicht mitgenommen wird.

Diese Pendelbewegung A wird durch eine in den Fig. 12 und 13 dargestellte Exzenterbewegung B nach oben und unten überlagert. Befindet sich der Umkehrpunkt 14b in Fig. 12 vorn und auf halbem Wege zur Oberseite der Antriebswelle 11, so hat das Fingerelement 15 seine tiefste Position, während es seine höchste Position erreicht, wenn sich der Umkehrpunkt 14a vorn in der Mitte zwischen seiner obersten und untersten Stellung befindet (Fig. 13).

Bedingt durch die unterschiedlichen Windungsrichtungen beidseitig der Umkehrpunkte 14a und 14b wird der Pendelbewegung A und der Exzenterbewegung B weiterhin eine hin- und hergehende Verschwenkbewegung C um die Längsmittellinie 15' überlagert, die in den Fig. 14 und 15 dargestellt ist. Die Amplituden dieser Schwenkbewegung C werden dann erreicht, wenn sich die Umkehrpunkte 14a und 14b in der Mitte zwischen der Ober- und der Unterseite der Antriebswelle 11 befinden.

Durch diese äußerst kompliziert zusammengesetzte Taumelbewegung des Fingerelementes 15 werden die Kaffeebohnen im Vorratsbehälter so wirksam gerüttelt, daß eine Brückenbildung, wie anmelderseitige Versuche eindeutig belegt haben, fast vollständig vermieden wird.

Die Erfindung ist nicht auf die beschriebenen und gezeichneten Ausführungsbeispiele beschränkt. So kann beispielsweise das Fingerelement eine abweichende Konstruktion aufweisen, beispielsweise mehrteilig ausgebildet sein oder mit undurchbrochenen Flügeln beispielsweise in Blättchenform, hergestellt werden oder einen stern- bzw. H-förmigen Querschnitt aufweisen. Es ist weiterhin möglich, die Pendel-, Exzenter- oder Schwenkbewegung durch andere Antriebsmaßnahmen bzw. durch eine andere Führung als die beschriebene Ringnut, beispielsweise durch einen an einen Nocken angepreßten Nockenfolger zu erreichen. Der Antrieb des Rüttlers muß nicht unbedingt mit dem Antrieb der Förderschnecke kombiniert werden, sondern kann beispielsweise über eine gesonderte Antriebswelle erfolgen. Schließlich kann der erfindungsgemäße Rüttler bei jedem Vorratsbehälter für Kaffeebohnen, beispielsweise für Verkaufsbehälter, reine Kaffeemühlen oder dgl. und für alle verwendeten Formen von Vorratsbehältern eingesetzt werden.

## Patentansprüche

1. Behälter (5) mit Schwerkraftfluß für Kaffeebohnen, mit einem in eine Entnahmeöffnung (9) mündenden Auslauftrichter (8) und einem im Bereich des Auslauftrichters (8) angeordneten, über einen Antrieb (11, 12) angetriebenen Rüttler (13) zum Bewegen der Kaffeebohnen, wobei der Rüttler (13) mit einem freien Ende (15b) in den Auslauftrichter (8) ragt und durch den Antrieb (11, 12) in eine Pendelbewegung (A) quer zur Fließrichtung der Kaffeebohnen unter Schwerkrafteinfluß versetzbar ist, **dadurch gekennzeichnet**, daß der Rüttler (13) ein langgestrecktes Fingerelement (15) aufweist und die Bewegung des freien Endes (15b) durch eine Führung (14) gesteuert ist.

2. Behälter nach Anspruch 1, **dadurch gekennzeichnet,** daß das freie Ende (15b) durch den Antrieb (11, 12) in eine Exzenterbewegung (B) versetzbar ist.

3. Behälter nach Anspruch 1 oder 2, **dadurch gekennzeichnet**, daß das freie Ende (15b) durch den Antrieb (11, 12) in eine Schwenkbewegung (C) um seine Längsmittellinie (15') versetzbar ist.

4. Behälter nach einem der Ansprüche 1 bis 3, **dadurch gekennzeichnet,** daß die Führung (14) als Ringnut in einer Antriebswelle (11) ausgebildet ist, wobei sich die Antriebswelle (11) um eine Längsachse (10') dreht und die Ringnut (14) mit ihrer Mittellinie (14') im Winkel (α) zur Längsachse (10') angeordnet ist.

5. Behälter nach Anspruch 4, **dadurch gekennzeichnet,** daß die Mittellinie (14') im Bereich der Ringnut (14) einen radialen Abstand (a) zur Längsachse (10') aufweist.

6. Behälter nach Anspruch 4 oder 5, **dadurch gekennzeichnet,** daß die Antriebswelle (11) unterhalb des Auslauftrichters (8) und quer zur Fließrichtung der Kaffeebohnen durch die Entnahmeöffnung (9) angeordnet ist, ein Ende (15a) des Fingerelementes (15) in der Führung (14) aufgenommen ist und sich das freie Ende (15b) durch die Entnahmeöffnung (9) bis zur oberen Kante des Auslauftrichters (8) erstreckt.

7. Behälter nach einem der Ansprüche 4 bis 6, **dadurch gekennzeichnet,** daß das Fingerelement (15) mit einer die Ringnut (14) im wesentlichen umgebenden Aufnahmeöffnung (17) lose in der Ringnut (14) sitzt und gegen eine Mitnahme bei der Drehung der Antriebswelle (11) durch einen Anschlag (8b) gesichert ist.

8. Behälter nach einem der Ansprüche 4 bis 7, **dadurch gekennzeichnet,** daß das Fingerelement (15) mit Hilfe einer Klammer (16b) in der Ringnut (14) angeordnet ist.

9. Behälter nach einem der Ansprüche 1 bis 8, **dadurch gekennzeichnet,** daß das Fingerelement (15) nicht-rotationssymmetrische Bereiche bezüglich seiner Längsmittellinie (15'), insbesondere in Form seitlich vorstehender Flügel aufweist.

10. Behälter nach einem der Ansprüche 1 bis 9, **dadurch gekennzeichnet,** daß das freie Ende (15b) des Fingerelementes (15) durch eine Schlaufe (16b) eines Materialstranges (16) gebildet ist.

11. Behälter nach einem der Ansprüche 1 bis 10, **dadurch gekennzeichnet,** daß das Fingerelement (15) im Bereich seines freien Endes (15b) flexibler ist als im Bereich des Antriebs (11, 12).

12. Kaffeemaschine mit einem Behälter (5) mit Schwerkraftfluß für Kaffeebohnen nach einem der Ansprüche 1 bis 11, und einer durch einen Antrieb (11, 12) um eine Längsachse (10') drehbaren Förderschnecke (10), wobei die Förderschnecke (10) unterhalb einer Entnahmeöffnung (9) des Behälters (5) und quer zur schwerkraftbedingten Fließrichtung der Kaffeebohnen durch die Entnahmeöffnung (9) angeordnet ist, **dadurch gekennzeichnet,** daß der Antrieb (11, 12) der Förderschnecke (10) mit einer Ringnut (14) als Führung für ein Ende (15a) eines Fingerelementes (15) eines Rüttlers (13) versehen ist, wobei die Mittellinie (14') der Ringnut (14) im Winkel (α) zur Längsachse (10') verläuft und daß sich ein freies Ende (15b) des Fingerelementes (15) durch die Entnahmeöffnung (9) erstreckt und in eine Pendelbewegung (A) quer zur Fließrichtung der Kaffeebohnen unter Schwerkrafteinfluß versetzbar ist.

## Claims

1. Container (5) with gravity flow for coffee beans, with a discharge funnel (8) leading into an outlet opening (9) and a vibrator (13) arranged in the region of the discharge funnel (8) and driven by a drive (11, 12) for moving the coffee beans, wherein the vibrator (13) extends by a free end (15b) into the discharge funnel (8) and can be set by the drive (11, 12) in an oscillating motion (A) transversely to the direction of flow of coffee beans under the influence of gravity, characterised in that the vibrator (13) has an elongate finger element (15) and the movement of the free end (15b) is controlled by a guide (14).

2. Container according to claim 1, characterised in that the free end (15b) can be set by the drive (11, 12) in an eccentric motion (B).

3. Container according to claim 1 or 2, characterised in that the free end (15b) can be set by the drive (11, 12) in a pivot motion (C) about its longitudinal centre line (15').

4. Container according to any of claims 1 to 3, characterised in that the guide (14) is constructed as an annular groove in a drive shaft (11), wherein the drive shaft (11) rotates about a longitudinal axis (10') and the annular groove (14) is arranged with its centre line (14') at an angle (α) to the longitudinal axis (10').

5. Container according to claim 4, characterised in that the centre line (14') in the region of the annular groove (14) has a radial distance (a) from the longitudinal axis (10').

6. Container according to claim 4 or 5, characterised in that the drive shaft (11) is arranged below the discharge funnel (8) and transversely to the direction of flow of coffee beans through the outlet opening (9), one end (15a) of the finger element (15) is held in the guide (14) and the free end (15b) extends through the outlet opening (9) as far as the upper edge of the discharge funnel (8).

7. Container according to any of claims 4 to 6, characterised in chat the finger element (15) sits loosely in the annular groove (14) with a receiving opening (17) essentially surrounding the annular groove (14) and is protected from entrainment during rotation of the drive shaft (11) by a stop (8b).

8. Container according to any of claims 4 to 7, characterised in that the finger element (15) is arranged by means of a clip (16b) in the annular groove (14).

9. Container according to any of claims 1 to 8, characterised in that the finger element (15) has non-rotationally symmecrical regions relative to its longitudinal centre line (15'), in particular in the form of laterally projecting blades.

10. Container according to any of claims 1 to 9, characterised in that the free end (15b) of the finger element (15) is formed by a loop (16b) of a string of material (16).

11. Container according to any of claims 1 to 10,
characterised in that the finger element (15) is more flexible in the region of its free end (15b) than in the region of the drive (11, 12).

12. Coffee machine with a container (5) with gravity flow for coffee beans according to any of claims 1 to 11, and a feed screw (10) rotatable by a drive (11, 12) about a longitudinal axis (10'), wherein the feed screw (10) is arranged below an outlet opening (9) of the container (5) and transversely to the gravity-related direction of flow of coffee beans through the outlet opening (9), characterised in that the drive (11, 12) of the feed screw (10) is provided with an annular groove (14) as a guide for one end (15a) of a finger element (15) of a vibrator (13), wherein the centre line (14') of the annular groove (14) runs at an angle (α) to the longitudinal axis (10') and in that a free end (15b) of the finger element (15) extends through the outlet opening (9) and can be set in an oscillating motion (A) transversely to the direction of flow of coffee beans under the influence of gravity.

## Revendications

1. Récipient (5) avec écoulement sous l'effet de la pesanteur pour grains de café, comprenant une trémie de décharge (8) débouchant dans une ouverture de retrait (9) et un secoueur (13) situé dans la zone de la trémie de décharge (8), commandé par une commande (11, 12) et servant à déplacer les grains de café, le secoueur (13) faisant saillie dans la trémie de décharge (8) avec une extrémité libre (15b) et pouvant être amené à effectuer, grâce à la commande (11, 12), un mouvement pendulaire (A) perpendiculairement à la direction d'écoulement des grains de café sous l'effet de la pesanteur, caractérisé en ce que le secoueur (13) comprend un élément (15) allongé similaire à un doigt et le mouvement de l'extrémité libre (15b) est commandé par un guide (14).

2. Récipient selon la revendication 1, caractérisé en ce que l'extrémité libre (15b) peut être amenée à effectuer un mouvement excentré (B) grâce à la commande (11, 12).

3. Récipient selon l'une des revendications 1 ou 2, caractérisé en ce que l'extrémité libre (15b) peut être amenée à effectuer un mouvement oscillant ( C ) autour de son axe longitudinal (15') grâce à la commande (11, 12).

4. Récipient selon l'une des revendications 1 à 3, caractérisé en ce que le guide (14) est exécuté en tant que gorge annulaire dans un arbre de commande (11), l'arbre de commande (11) tournant autour d'un axe longitudinal (10') et la ligne médiane (14') de la gorge annulaire (14) formant un angle (α) par rapport à l'axe longitudinal (10').

5. Récipient selon la revendication 4, caractérisé en ce que la ligne médiane (14') est située à une distance radiale (a) de l'axe longitudinal (10') dans la zone de la gorge annulaire (14).

6. Récipient selon l'une des revendications 4 ou 5, caractérisé en ce que l'arbre de commande (11) est situé sous la trémie de décharge (8) et est perpendiculaire à la direction d'écoulement des grains de café à travers l'ouverture de retrait (9), une extrémité (15a) de l'élément (15) similaire à un doigt est reçue dans le guide (14) et l'extrémité libre (15b) s'étend à travers l'ouverture de retrait (9) jusqu'au bord supérieur de la trémie de décharge (8).

7. Récipient selon l'une des revendications 4 à 6, caractérisé en ce que l'élément (15) similaire à un doigt repose sans être fixé dans la gorge annulaire (14) grâce à une ouverture de réception (17) entourant essentiellement la gorge annulaire (14) et est assuré de ne pas être entraîné, lors de la rotation de l'arbre de commande (11), grâce à une butée (8b).

8. Récipient selon l'une des revendications 4 à 7, caractérisé en ce que l'élément (15) similaire à un doigt est placé dans la gorge annulaire (14) à l'aide d'une pince (16b).

9. Récipient selon l'une des revendications 1 à 8, caractérisé en ce que l'élément (15) similaire à un doigt est pourvu de zones ne présentant pas une symétrie de révolution par rapport à son axe longitudinal (15') et ayant notamment la forme d'ailes saillantes latéralement.

10. Récipient selon l'une des revendications 1 à 9, caractérisé en ce que l'extrémité libre (15b) de l'élément (15) similaire à un doigt est formée par une boucle (16b) d'un cordon de matériau (16).

11. Récipient selon l'une des revendications 1 à 10, caractérisé en ce que l'élément (15) similaire à un doigt est plus flexible dans la zone de son extrémité libre (15b) que dans la zone de la commande (11, 12).

12. Machine à café comprenant un récipient (5) avec écoulement sous l'effet de la pesanteur pour grains de café selon l'une des revendications 1 à 11, et une vis sans fin (10) pouvant effectuer une rotation autour d'un axe longitudinal (10') grâce à une commande (11, 12), la vis sans fin (10) étant située sous une ouverture de retrait (9) du récipient (5) et étant perpendiculaire à la direction d'écoulement des grains de café à travers l'ouverture de retrait (9) sous l'effet de la pesanteur, caractérisée en ce que la commande (11, 12) de la vis sans fin (10) est pourvue d'une gorge annulaire (14) en tant que guide pour une extrémité (15a) d'un élément (15) similaire à un doigt d'un secoueur (13), la ligne médiane (14') de la gorge annulaire (14) formant un angle (α) par rapport à l'axe longitudinal (10'), et en ce qu'une extrémité libre (15b) de l'élément (15) similaire à un doigt s'étend à travers l'ouverture de retrait (9) et peut être amenée à effectuer un mouvement pendulaire (A) perpendiculaire à la direction d'écoulement des grains de café sous l'effet de la pesanteur.
